# EUROPÄISCHE PATENTSCHRIFT

(11) **EP 0 789 644 B1**
(45) Veröffentlichungstag und Bekanntmachung des Hinweises auf die Patenterteilung: **24.03.1999**
(21) Anmeldenummer: 95934579.4
(22) Anmeldetag: 27.10.1995
(51) Int. Cl.: B28B 7/34, B29C 33/38

(54) **VORRICHTUNG ZUR FLUID-LEITUNG ZWISCHEN EINEM DURCH EINE FESTE OBERFLÄCHE BEGRENZTEN RAUM UND EINEM KANAL, SOWIE VERFAHREN ZUR HERSTELLUNG DER VORRICHTUNG**
DEVICE FOR CONDUCTING FLUID BETWEEN A CHAMBER BOUNDED BY A SOLID SURFACE AND A CHANNEL, AND A METHOD OF MANUFACTURING SAID DEVICE
DISPOSITIF DE CIRCULATION D'UN FLUIDE ENTRE UN VOLUME DELIMITE PAR UNE SURFACE SOLIDE ET UN CANAL, ET PROCEDE DE FABRICATION DE CE DISPOSITIF

(30) Priorität: 02.11.1994 CH 3269/94; 02.11.1994 CH 3270/94
(43) Veröffentlichungstag der Anmeldung: 20.08.1997
(73) Patentinhaber: PORTEC AG, 8404 Winterthur (CH)
(72) Erfinder: HIRZEL, Theodor, CH-8967 Widen (CH)
(74) Vertreter: Frei, Alexandra Sarah
(86) Internationale Anmeldenummer: CH9500250
(87) Internationale Veröffentlichungsnummer: WO9614194

(56) Entgegenhaltungen:
- EP-A- 0 440 874
- DE-A- 1 504 261
- DE-A- 4 131 298
- DE-C- 4 225 412
- PATENT ABSTRACTS OF JAPAN vol. 014 no. 010 (M-917) ,10.Januar 1990 & JP,A,01 257006 (INAX CORP) 13.Oktober 1989,

## Beschreibung

Die Erfindung liegt auf dem Gebiete der Leitung von bewegten Fluiden und betrifft eine Vorrichtung und ein Verfahren zur Herstellung der Vorrichtung nach den Oberbegriffen der entsprechenden, unabhängigen Patentansprüche. Die Vorrichtung dient der Leitung von Fluiden zwischen einem Raum, der mindestens teilweise von einer festen, vom Fluid zu passierenden Oberfläche begrenzt ist, und einem Kanal, durch den das Fluid zu- oder abgeführt wird.

Fluide werden für verschiedenste Zwecke mittels Pumpen oder ähnlichen Fluid-Fördermitteln in Kanalsystemen transportiert. Eine Vielzahl derartiger Fluid-Leitungssysteme mit Fluid-Fördermitteln dienen dazu, ein Fluid für eine spezifische Wirkung in einen Raum zu bringen, oder aus einem Raum abzuführen, wobei das Fluid zwischen Raum und Kanal durch Öffnungen in der den Raum begrenzenden Oberfläche bzw. durch ein offenes Kanalende gefördert werden.

Beispiele solcher Fluid-Leitungssysteme sind Systeme zum Evakuieren von Räumen Systeme zum Begasen von Räumen, Systeme zum Heizen oder Kühlen von Räumen durch Transport von fluiden Wärmeträgern durch die Räume oder Systeme zum Entfernen von Festkörpern oder anderen Fluiden aus Räumen durch Ausnutzung der kinetischen Energie von in die Räume zugeführten Fluiden. In vielen dieser Anwendungen wäre es aus verschiedensten Gründen wünschenswert, das Fluid sozusagen als Kontinuum durch die den Raum begrenzende Oberfläche transportieren zu können, derart, dass alle Punkte dieser Oberfläche bezüglich Fluid-Durchleitung identisch wären. Dieser Wunsch wird gemäss dem Stande der Technik näherungsweise erfüllt dadurch, dass eine grössere Anzahl von sich in den Raum öffnenden Kanalenden vorgesehen werden, oder dadurch, dass grössere Kanalenden mit einer porösen Wandung abgeschlossen werden, wobei zwischen Kanalende und poröser Wandung ein Verteilerraum vorgesehen wird. Je feiner die Poren derartiger poröser Wandungen sind desto höher ist das Druckgefälle, das notwendig wird, um das Fluid durch die Wand zu fördern, was wiederum die Anforderungen an die mechanische Stabilität der Wand erhöht. Aus diesen Gründen ist für jede Anwendung ein Verfahrens-ökonomisches Optimum zu suchen zwischen einer für die Anwendung noch genugenden Flächen-Kontinuität der Fluidförderung über die ganze zu durchströmende Oberfläche und einer noch akzeptablen Grösse der notwendigen Druckdifferenz.

Aus den Publikationen EP-0440874 und JP-1-257006 sind Formen zum Giessen von beispielsweise keramischen Produkten bekannt, welche Formen im wesentlichen aus einem Gemisch von Kunststoff und Partikeln bestehen, wobei die Partikel von der Forminnenoberfläche gegen die Formaussenoberfläche grösser werden und dadurch die Porosität des Formmaterials ansteigt. Diese Formen weisen sehr fein poröse Innenoberflächen auf durch die aus einer in den Giesshohlraum gegossenen Giessmasse Wasser abgesaugt werden kann oder durch die zum Ausstossen der gegossenen Formstücke Druckluft gepresst werden kann. In der Publikation DE-1504261 sind ähnliche Formen für die Vakuumformung beschrieben. Alle diese Formen stellen Vorrichtungen zur Fluidleitung zwischen einem durch eine feste Oberfläche begrenzten Raum und einem Kanal dar, wobei auf die Kanalseite der Vorrichtungen in den genannten Publikationen kaum eingegangen wird.

Es ist nun die Aufgabe der Erfindung, eine Vorrichtung zur Fluidleitung zwischen einem durch eine feste Oberfläche begrenzten Raum und einem Kanal zu schaffen und ein Verfahren zur Herstellung der Form aufzuzeigen, derart, dass die Vorrichtung eine gute Kontinuität des Fluidflusses durch die ganze Oberfläche bei einem mit bekannten, ähnlichen Vorrichtungen vergleichbaren oder gar verbesserten Aufwand für die Förderung des Fluides ermöglicht und trotzdem sehr einfach herstellbar ist.

Diese Aufgabe wird gelöst durch die Vorrichtung und das Verfahren zur Herstellung der Vorrichtung, wie sie in den Patentansprüchen definiert sind.

Die erfindungsgemässe Vorrichtung besteht aus einem gröber porösen Formstück, dessen Oberfläche, da wo sie vom Fluid durchströmt werden soll eine feiner poröse Oberflächenschicht trägt und auf den anderen Oberflächenbereichen Fluid-undurchlässige Abschlussmittel, die durch mindestens eine Kanalanschlussöffnung unterbrochen sind. Dabei sind mindestens das gröber poröse Formstuck und die feiner poröse Oberflächenschicht als ein Kunststoffkörper ausgestaltet, durch den sich ein dreidimensionales Netz von Poren zieht, welche Poren sich verfeinernd aber kontinuierlich vom Formstuck in die Oberflächeuschicht und zu deren äusserer Oberfläche führen. Die Fluid-undurchlässigen Abschlussmittel können als porenlose Abschlussschicht desselben Kunststoffkörpers ausgebildet sein oder es kann sich um einen separaten Teil handeln, der mit geeigneten Mitteln mit dem Kunststoffkörper verbunden ist.

Das gröber poröse Formstück, die feiner poröse Oberflächenschicht und gegebenenfalls die porenlose Abschlussschicht bestehen vorteilhafterweise aus demselben ausgehärteten Kunststoff, wobei in den Kunststoff im Bereiche der Oberflachenschicht kleinere Partikel, im Bereiche des Formstücks grössere Partikel und im Bereiche der Abschlussschicht keine Partikel eingelagert sind.

Der Gewichtsanteil der Partikel ist dabei in der Oberflächenschicht und im Formstück grösser als der Gewichtsanteil des Kunststoffs und er ist in der Oberflächenschicht meist Kleiner als im Formstuck.

Zur Herstellung der Vorrichtung werden verschiedene Mischungen von Partikeln und noch nicht ausgehärtetem Kunststoff hergestellt, werden diese Mischungen in geeigneten Formen aufeinander geschichtet, verdichtet (gegebenenfalls einzeln) und zusammen ausgehärtet.

Ein für die Herstellung der erfindungsgemässen Vorrichtung insbesondere geeigneter Werkstoff ist beschrieben in der Publikation EP-486421. Der Werkstoff besteht aus einem ausgehärteten Kunststoff, beispielsweise ein Kunststoff auf Epoxidbasis, in den Partikel mit einer vorzugsweise unregelmässigen Form eingelagert sind derart, dass der Werkstoff eine in allen Richtungen durchgehende Porosität aufweist. Die Partikel bestehen vorzugsweise aus Aluminium oder aus einer Aluminiumlegierung, können aber auch aus einem anderen Metall oder aus einem keramischen Material bestehen.

Der Werkstoff kann in einem zweistufigen Verfahren hergestellt werden, indem zuerst die Partikel mit einem Teil des noch nicht ausgehärteten Kunststoffs bzw. mit entsprechenden Komponenten des Kunststoffs, beispielsweise mit einem Teil der Harzkomponente (ohne Härter) geknetet werden. Es entsteht dadurch ein giess- oder streichbares Gemisch, in dem die Partikel in Clustern zu beispielsweise fünf bis zwanzig Partikeln auftreten, wobei die Clustergrösse vom Mischverhältnis Kunststoff/Partikel, von der Partikelgrösse, von der Knetdauer und der Knetintensität abhängig ist. Die Clustermischung stellt ein aufbewahrbares Zwischenprodukt dar, in dem aber die Porosität eines daraus herzustellenden Körpers bereits mindestens partiell vorbestimmt ist. In einem zweiten Schritt wird die Clustermischung mit dem Rest des Kunststoffes bzw. Rest von Kunststoffkomponenten (z.B. Härter) zusammengegeben, gemischt, in eine Form gefüllt, durch Fressen oder Vibrieren verdichtet und ausgehärtet, wobei die Porosität des fertigen Produktes insbesondere von der Verdichtung endbestimmt wird.

Der Werkstoff kann auch mit einem einzigen Misch-/Knetschritt hergestellt werden, wobei eine Mischung von Partikeln mit der gesamten, zu verarbeitenden Menge bzw. allen Komponenten des Kunststoffes durch Mischen und Kneten hergestellt, geformt, verdichtet und ausgehärtet wird. Die Porosität des fertigen Werkstoffes ist dann insbesondere bestimmt durch die Partikelgrösse, deren Gewichtsanteil in der Partikel/Kunststoffmischung und durch die Art und Intensität des Mischens und Verdichtens.

Die charakteristische Eigenschaft dieses Werkstoffes (gemäss EP-486421) ist seine durch die Wahl der Komponenten und durch das Herstellungsverfahren einstellbare, offene Porosität. Die Poren durchziehen als feine und feinste Kanäle den Werkstoff in allen Richtungen gleichmässig und bilden durch die ungleichmässige Form der Partikel an den Werkstoffoberflächen mindestens zum Teil sich gegen aussen verengende Mündungen.

Die Porosität des Materials ist einstellbar insbesondere durch die Partikelgrösse und durch das Mischverhältnis von Partikeln und Kunststoff, aber auch durch die Art und die Dauer des Mischvorganges und die Art der Verdichtung (Vibration, Pressdruck) vor und/oder während dem Aushärten des Kunststoffes.

Es zeigt sich, dass bei Verwendung von Aluminiumgranulat von Siebfraktionen im Bereiche von 50 bis 200µm, das mit einem Epoxidharz und einem entsprechenden Härter im Verhältnis von ca. 1 : 0,1 (Gewicht Granulat : Gewicht Kunststoffkomponenten) bis ca. 1 : 0,5, insbesondere im Verhältnis von ca. 1 : 0,15, gemischt wird, ein Material entsteht, das sich für die feinporige Oberflächenschicht gut eignet. Insbesondere bildet dieses Material eine Oberfläche, die eine für eine hohe Flächen-Kontinuität der Fluidströmung durch die Oberfläche geeignete Porigkeit aufweist und die ohne Nachbearbeitung den höchsten Ansprüchen für den Kontakt mit beispielsweise einem zu verarbeitenden Kunststoff genügt. Die Oberfläche kann aber auch nachbearbeitet werden.

Das gröber poröse Formstück enthält grössere Partikel, beispielsweise Siebfraktionen von 0,5 bis 1,25mm, und denselben Kunststoff wie das Material der Oberflächenschicht, wobei im Verhältnis zur Mischung für die Oberflächenschicht gewichtsmässig meist mehr Granulat und weniger Kunststoff eingesetzt wird, beispielsweise ein Mischverhältnis von Granulat zu Kunststoff zwischen ca. 1 : 0,05 bis 1 : 0,1, insbesondere von ca. 1 : 0,07.

Die kontinuierliche Fortsetzung der Poren von der feiner porösen Oberflächenschicht zum gröber porösen Formstück wird erreicht, indem die beiden Granulat/Kunststoff-Mischungen im noch nicht ausgehärteten Zustand des Kunststoffes aneinandergebracht und aneinandergepresst werden und indem die beiden Mischungen in diesem Zustand miteinander ausgehärtet werden.

Beispiele der erfindungsgemässen Vorrichtung für verschiedene Anwendungen werden im Zusammenhang mit den folgenden Figuren mehr im Detail beschrieben. Dabei zeigen:
- **Figur 1**: einen Schnitt durch eine beispielhafte Ausführungsform der erfindungsgemässen Vorrichtung verwendbar als Form zum Tiefziehen oder als Form zur Herstellung von Gegenständen aus keramischem Material;
- **Figur 2**: einen Schnitt durch eine beispielhafte Ausführungsform der erfindungsgemässen Vorrichtung verwendbar für einen Prozess zur Nachexpansion und Verschweissung von Kunststoffgranulat;
- **Figuren 3 und 4**: zwei aufeinanderfolgende Phasen des Verfahrens zur Herstellung der Ausführungsform der erfindungsgemässen Vorrichtung nach Figur 1.
- **Figur 5**: einen Querschnitt durch eine weitere beispielhafte Ausführungsform der erfindungsgemässen Vorrichtung verwendbar als Begasungselement;
- **Figuren 6 bis 10**: aufeinanderfolgende Phasen der Herstellung des Begasungselements gemäss Figur 5;
- **Figur 11**: ein Schema eines Kreisprozesses zur Herstellung von Begasungselementen gemäss Figur 5.

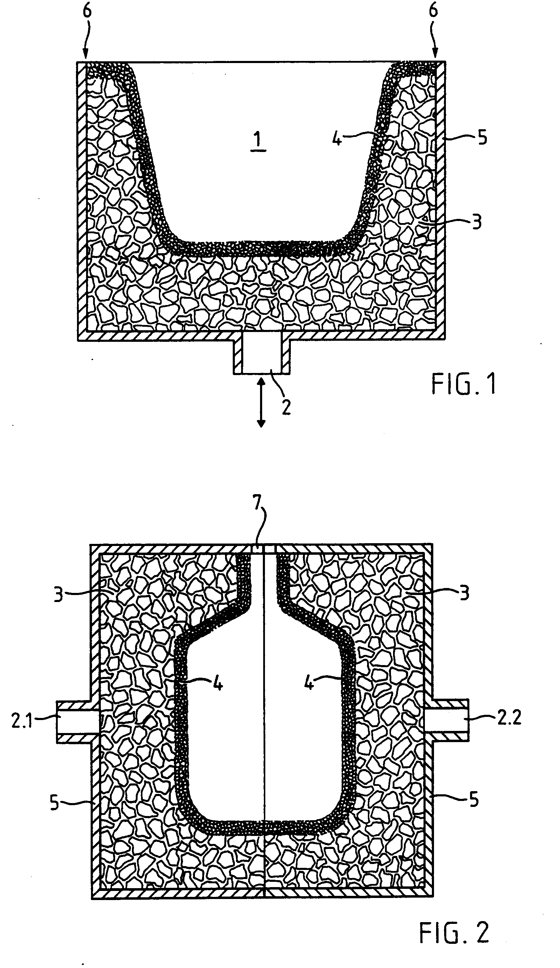

**Figur 1** zeigt eine beispielhafte Ausführungsform der erfindungsgemässen Vorrichtung. Es handelt sich um eine Form, die beispielsweise zum Tiefziehen anwendbar ist oder zur Herstellung von Gegenständen aus einem keramischen Material.

Die dargestellte Form besteht im wesentlichen aus einem gröber porösen Formstück 3, das mechanische Eigenschaften aufweist, die es ihm erlauben, die mechanischen Funktionen der Form zu übernehmen, und das von einem Netz von relativ groben Poren in allen Richtungen gleichmässig durchsetzt ist, derart, dass ein fluides Medium ohne ins Gewicht fallenden Widerstand durch dieses Formstück beförderbar ist und sich aus diesem Grunde auch ohne weiteres regelmässig in diesem Formstück verteilt. An denjenigen Oberflächenbereichen des Formstücks, die durch das Fluid zu durchströmen sind, schliesst an das Formstück 3 eine feiner poröse Oberflächenschicht 4 an, deren Poren sowohl gegen die Formoberfläche offen sind als auch sich kontinuierlich in die Poren des Formstücks fortsetzen.

Die feiner poröse Oberflächenschicht 4 hat beispielsweise eine Dicke von ca. 5mm bis 10mm. In der Anwendung zeigt es sich, dass es nicht notwendig ist, die Oberflächenschicht überall exakt gleich dick zu gestalten

Die Oberflächenbereiche des Formstücks, die nicht vom Fluid zu durchströmen sind, brauchen keine feiner poröse Oberflächenschicht. Diese Oberflächen sind mit entsprechenden, Fluid-undurchlässigen Abschlussmitteln 5 abgeschlossen und an mindestens einer Stelle (Kanalanschlussöffnung 2) ist das Formstück durch diese abgedichtete Oberfläche hindurch über einen nicht dargestellten Kanal mit Mitteln zur Fluidförderung (z.B. Druckspeicher, Pumpe) verbunden. Die Fluid-undurchlässigen Abschlussmittel 5 bestehen beispielsweise aus einem entsprechenden, offenen Behälter, welcher Behälter eine Kanalanschlussöffnung 2 und gegebenenfalls Kanalanschlussmittel in Form eines Rohrstutzens oder ähnlichem aufweist. Rund um den becherförmigen Hohlraum 1 der Form (Stellen 6) sind vorteilhafterweise entsprechende Dichtungen anzubringen. Der Behälter (5) besteht beispielsweise aus Kunststoff oder aus Metall.

Die Abschlussmittel 5 können auch als Abschlussschicht ausgebildet sein und aus demselben Kunststoffmaterial bestehen wie Formstück 3 und Oberflächenschicht 4 und einstückig an das Formstück angeformt sein. Dabei enthält das Kunststoffmaterial einer derartigen Abschlussschicht keine Partikel wie die porösen Bereiche und ist dadurch für Fluide undurchlässig. Eine derartige Abschlussschicht kann aber beispielsweise zur mechanischen Verstärkung Glasfasern enthalten.

Eine Form, wie sie in der Figur 1 dargestellt ist, dient beispielsweise zum Tiefziehen von becherförmigen Teilen aus einer Kunststoffolie. Für das Tiefziehen wird eine Kunststoffolie über den becherförmigen, offenen Hohlraum 1 der Form positioniert und durch die Kanalanschlussöffnung 2 wird mittels einer Absaugeinrichtung die Luft aus dem Hohlraum abgesaugt. Durch den im Hohlraum 1 entstehenden Unterdruck wird die Folie gegen die Form gezogen und entsprechend deformiert, wobei zusätzlich ein Gegenwerkzeug zum Einsatz kommen kann. Zum Ausstossen des fertigen, tiefgezogenen Bechers wird durch die Kanalanschlussöffnung 2 Druckluft zugeführt.

Eine Form, wie sie in der Figur 1 dargestellt ist, kann zusammen mit einem entsprechenden Gegenwerkzeug auch zur Herstellung von Keramikgegenständen dienen, wobei das ungehrannte Material zwischen die beiden Werkzeuge gegossen wird, das Gegenwerkzeug entfernt wird, der Gegenstand vorgetrocknet und dann durch Zuführung von Druckluft aus der Form ausgestossen wird. In dieser Anwendung ist eine hohe Flächen-Kontinuität der angewendeten Druckluft sehr wichtig, da das noch nicht gebrannte, keramische Material mechanisch sehr empfindlich ist.

Eine erfindungsgemässe Vorrichtung zur Anwendung beispielsweise beim Tiefziehen von Kunststoffolien oder für die Herstellung von Keramikgegenständen kann zur gleichzeitigen Herstellung von mehreren Gegenständen selbstverständlich wie bekannte derartige Formen auch mehrere, nebeneinanderliegende, offene Hohlräume 1 aufweisen. Selbstverständlich kann auch ein entsprechendes Gegenwerkzeug, das dann eine konvexe poröse Oberflächenschicht aufweist, analog zur Vorrichtung der Figur 1 ausgestaltet sein.

**Figur 2** zeigt schematisch eine weitere Ausführungsform der erfindungsgemässen Vorrichtung. Es handelt sich dabei um eine einfache Form zur Herstellung eines Teiles aus Kunststoffgranulat durch Nachexpandieren und Verschweissen des Granulates. Derartige Herstellungsverfahren kommen insbesondere bei der Herstellung von Giessformen für lost-foam-Giessverfahren und für die Herstellung von beispielsweise Verpackungshilfsmitteln aus Polystyrolgranulat zur Anwendung. Der Aufbau der dargestellten Form ist im wesentlichen gleich wie für die im Zusammenhang mit der Figur 1 beschriebene Vorrichtung. Gleiche Teile bzw. gleiche Bereiche sind denn auch mit gleichen Bezugsziffern bezeichnet. Die Form ist zwei- oder mehrteilig und bis auf eine verschliessbare Öffnung 7 für die Zufuhr des Granulates geschlossen. Einander gegenüberliegend sind mindestens je eine Kanalanschlussöffnung 2.1 und 2.2 angebracht, durch die in nacheinander alternierender Richtung ein fluides Medium, beispielsweise Wasserdampf, als Energieträger durch die Form und das darin enthaltene Granulat gefördert wird.

Es zeigt sich, dass in einer Form, wie sie in der Figur 2 sehr schematisch dargestellt ist, dank der sehr regelmässigen Verteilung des Energieträgers über die ganze Form eine äusserst regelmässige Nachexpansion und Verschweissung des Kunststoffgranulates erreicht werden kann.

Formen, wie sie in der Figur 2 dargestellt sind, können beispielsweise auch zum Niederdruck-Spritzgiessen verwendet werden, wobei der fertig gegossene und abgekühlte Gegenstand mit Druckluft, die durch die Form zugeführt wird, ausgestossen wird. Weitere Anwendungen sind auch denkbar für Prozesse, in denen das durch die Form zugeführte Fluid eine chemische Veränderung des Hohlrauminhaltes zu bewirken hat. Dank ihrer einfachen Herstellung und ihres Kleinen Gewichtes bringen derartige Formen aber auch für Herstellungsprozesse, die ohne Fluid arbeiten, entsprechende Vorteile.

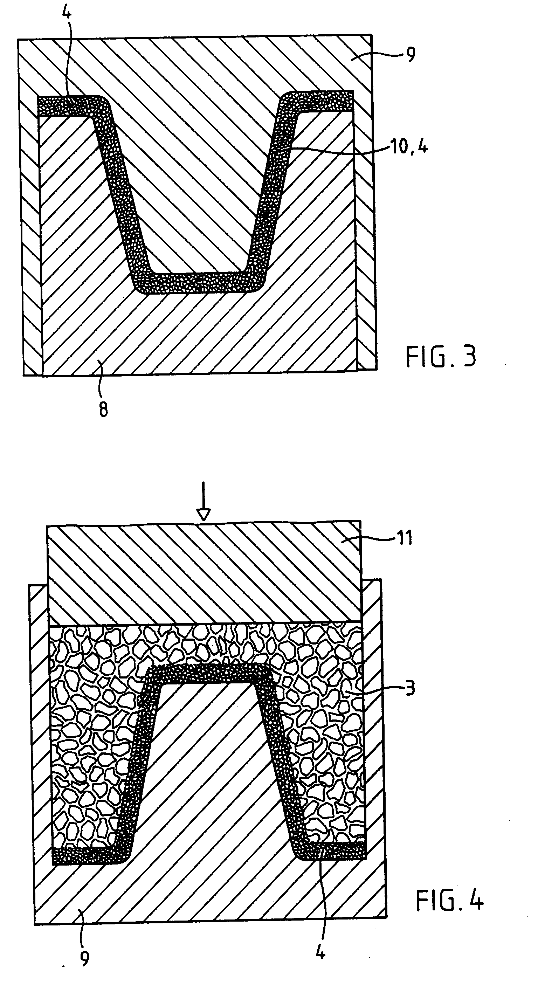

**Figuren 3 und 4** zeigen nun, ebenfalls in sehr schematischer Weise, ein Verfahren zur Herstellung der Ausführungsform gemäss Figur 1 der erfindungsgemässen Vorrichtung. Nach demselben Verfahren sind auch Formen gemäss Figur 2 herstellbar.

Zwischen zwei Formteilen 8 und 9 (Figur 3), die zusammen einen Hohlraum 10 bilden, der der zu erstellenden Oberflächenschicht 4 entspricht, wird eine erste Mischung aus nicht ausgehärtetem Kunststoff und beispielsweise Aluminiumgranulat gebracht. Die mit der Mischung in Kontakt tretenden Oberflächen der Formteilen sind derart vorbereitet, dass die Mischung nicht an ihnen haftet. Zwischen den Formteilen wird die Mischung durch Vibrieren und/oder Wirkung eines Pressdruckes verdichtet. Dann werden die Formteile 8 und 9 zusammen gedreht und der Formteil 8 wird entfernt.

Die Oberflächenschicht 4 kann auch mit nur einem Formteil (8 oder 9) erstellt werden. Dabei wird auf diesem Formteil eine entsprechende Schicht der ersten Mischung aufgebracht und mit einer Folie dicht bedeckt. Dann wird der Raum der Oberflächenschicht, das heisst der Raum zwischen Folie und Form evakuiert, wodurch ebenfalls ein verdichtend wirkender Pressdruck entsteht. Es zeigt sich, dass beispielsweise ein auf ca. 0,8 bis 0,6 bar reduzierter Druck zu guten Verdichtungsresultaten führt.

Figur 4 zeigt den zweiten Schritt des Verfahrens zur Herstellung der erfindungsgemässen Vorrichtung: die Herstellung des grob porösen Formstucks 3. Dazu wird in den Formteil 9 eine zweite Mischung aus Aluminiumgranulat und Kunststoff gefüllt und mit Hilfe eines weiteren Formteils 11 durch Vibrieren und/oder Pressdruck verdichtet, wobei dieser Pressdruck nicht höher sein soll als der Pressdruck, der für die Verdichtung der ersten Mischung angewendet wurde. Vorteilhalterweise unter weiterer Wirkung des Pressdruckes wird dann der in den beiden Mischungen enthaltene Kunststoff ausgehärtet.

Die folgenden beiden Mischungen und entsprechenden Verfahrensparameter eigenen sich insbesondere für die Herstellung von Formen für lost-foam-Giessprozesse, durch die für das Nachexpandieren und Verschweissen des Kunststoffgranulates Wasserdampf mit einer Temperatur von ca. 100°C gefördert wird.

### Erste Mischung für die feiner poröse Oberflächenschicht 4:

- Kunststoff: Epoxidharz und Härter
- eingelagerte Partikel: Granulat einer Aluminium-Siliziumlegierung (Siebfraktion 100µm und 63µm, Gewichtsverhältnis: 332:83)
- Mischverhältnis: Partikel zu Kunststoff 415:50
- Mischverfahren: mit mischender und knetender Wirkung, 15Min.
- Verdichtung: Pressdruck ca. 120kp/cm², 5 bis 10sec.

### Zweite Mischung für das gröber poröse Formstück 3:

- Kunststoff: Epoxidharz und Härter
- eingelagerte Partikel: Granulat aus Aluminium (Siebfraktion 0,5 bis 1,25mm)
- Mischverhältnis: Partikel zu Kunststoff 622:45
- Mischverfahren: mit mischender und knetender Wirkung, 5Min.
- Verdichtung: Pressdruck ca. 1kp/cm², wahrend dem Aushärten.

Aushärten des ganzen Kunststoffkörpers: 80°, 3Std.

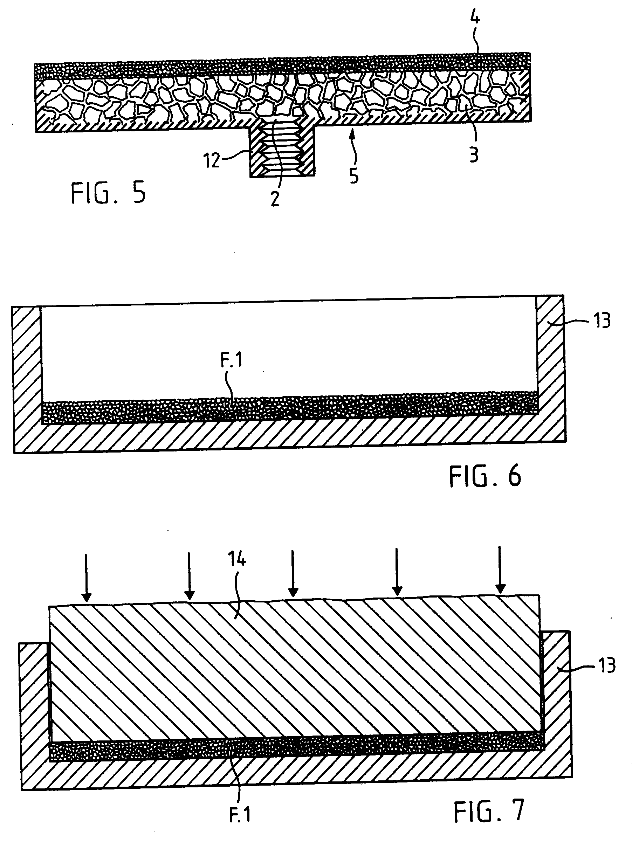

**Figur 5** zeigt im Querschnitt als weitere, beispielhafte Ausführungsform der erfindungsgemässen Vorrichtung ein Begasungselement. Dieses ist einstückig und besteht im wesentlichen aus einem Kunststoffmaterial, das durch einen Aushärtungsvorgang in eine feste Form gebracht ist, beispielsweise aus einem ausgehärteten Epoxidharz. Der Kunststoffkörper weist ein flächiges, gröber poröses Formstück 3 auf, das auf einer Seite durch eine feiner poröse Oberflächenschicht 4 und auf der anderen Seite, sowie auf den Schmalseiten durch ein Fluid-undurchlässiges Abschlussmittel 5 in Form einer Abschlussschicht mit einer Kanalanschlussöffnung 2, die mit Kanalanschlussmitteln 12 versehen ist, abgedeckt ist. Das Begasungselement besitzt keinen hohlen Innenraum. Aus diesem Grunde kann es durch eine Aufeinanderfolge einfacher Verfahrensschritte, die Giessen, Pressen und Aushärten umfassen, hergestellt werden. Das derart hergestellte Begasungselement braucht keinerlei Nachbearbeitung. Es kann direkt auf einen Rohrstutzen mit beispielsweise normiertem Aussengewinde aufgeschraubt werden. Durch die Einstückigkeit des Begasungselements fallen besondere Vorkehrungen zur Verhinderung von nicht erwünschtem Gasaustritt am Element selbst vollständig weg und werden nur an der Verbindungsstelle zwischen Begasungselement und Kanal notwendig.

Das Begasungselement besteht im wesentlichen aus denselben Materialien wie die im Zusammenhang mit den Figuren 1 und 2 beschriebenen Formen. Der Aufbau des verwendeten Werkstoffes bewirkt, dass durch die feinporige Oberfläche des Begasungselmentes austretendes Gas kleinblasig ist und dass trotzdem der Gasdurchleitung kein grosser Widerstand entgegensteht, das heisst, dass der für die Begasung notwendige Überdruck klein ist.

Da die Porosität des Materials einfach einstellbar ist, sind Begasungselemente gemäss Figur 5 auch einfach an vorgegebene Einsatztiefen (verschiedene Flüssigkeitsdrücke) und/oder vorgegebene Gasdrücke anpassbar, wobei die Grösse der entstehenden Blasen und die durchfliessende Gasmenge im wesentlichen konstant gehalten werden kann.

Die oberflächigen Mündungen der Kanäle in einem derartigen Werkstoff sind derart fein, dass kaum Verunreinigungen eindringen können, sodass die Begasungselemente auch bei einer Anwendung in Klärbecken eigentlich nicht gereinigt werden müssen. Die in der Kunststoffmatrix eingelagerten Partikel werden durch den Kunststoff umgeben und abgedeckt, sodass sie einer korrodierenden Wirkung der Flüssigkeit und/oder des Gases nur sehr beschränkt ausgesetzt sind. Zudem können sie auch aus korrosionsbeständigen Materialien, wie beispielsweise keramischen Materialien oder entsprechend legierten Metallen (z.B Aluminium-Silizium-Legierungen) bestehen.

Weitere, beispielhafte Ausführungsformen der erfindungsgemässen Vorrichtung als Begasungselement können sich von der in der Figur 5 dargestellten Ausführungsform unterscheiden dadurch, dass sie beispielsweise mehr als zwei verschieden poröse Schichten (Formstück 3 und Oberflächenschicht 4) aufweisen, wobei die Porosität mit zunehmendem Abstand von der Abschlussschicht 5 und insbesondere von der Kanalanschlussöffnung 2 feiner wird. Andere Ausführungsformen können auch weniger flach sein und eine Abschlussschicht 5 aufweisen, die sich auf die unmittelbare Umgebung der Kanalanschlussöffnung beschränkt.

**Die Figuren 6 bis 10** zeigen verschiedene, aufeinanderfolgende Phasen einer beispielhaften Verfahrensvariante zur Herstellung des Begasungselements gemäss Figur 5.

In Figur 6 ist ein Formteil 13 dargestellt, dessen ebene Innenbodenfläche in ihrer Form der flächigen Form des herzustellenden Begasungselements entspricht. Der Formteil besteht aus einem Material, an dem der zu verwendende Kunststoff nicht haftet oder ist für eine derartige Nicht-Haftung entsprechend behandelt. In diesen Formteil 13 wird zur Herstellung der feiner porösen Oberflächenschicht 4 eine Mischung F.1 gefüllt, welche Mischung aus Partikeln und unausgehärtetem Kunststoff besteht. Diese Mischung F.1 wird in der Form vibriert und/oder mit einem ersten Stempel 14 gepresst, wie dies in der Figur 7 dargestellt ist.

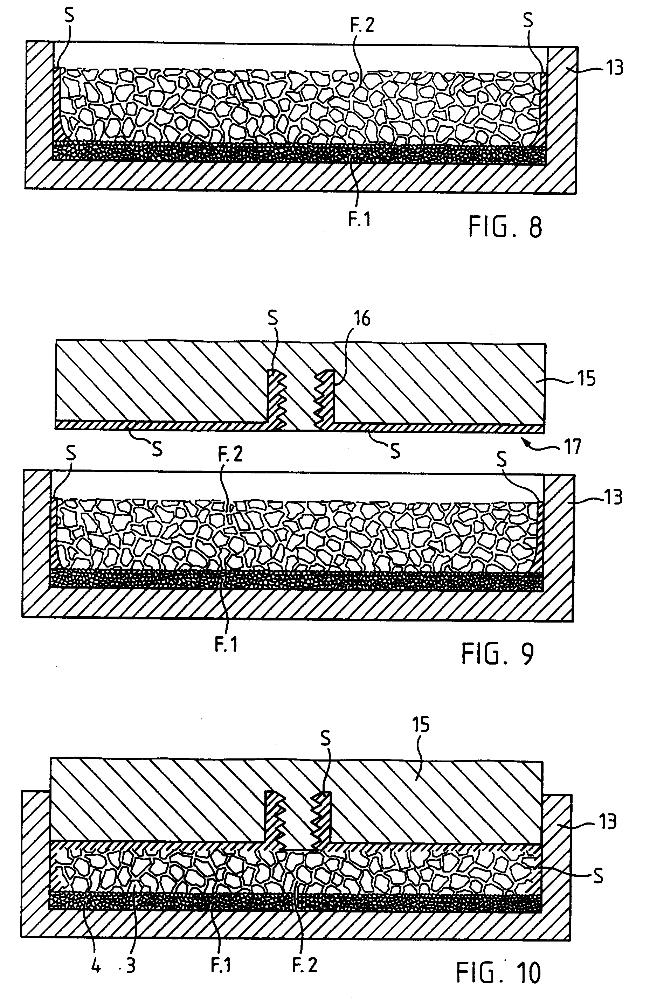

Dann wird, wie in der Figur 8 dargestellt, auf die vibrierte und/oder gepresste Schicht aus der ersten Partikel/Kunststoff-Mischung F.1 entlang der Wand des Formteils 13 Kunststoffmaterial S ohne Partikel (gegebenenfalls mit beispielsweise Glasfasern als Füll- oder Verstärkungsmaterial) aufgebracht. Damit dieses Auftragen einfach durchführbar ist, ist es vorteilhaft, wenn das ungehärtete Kunststoffmaterial S pastenförmig oder thixotrop ist. Dann wird auf die erste Mischung F. 1 für die Oberflächenschicht 4 eine zweite Partikel/Kunststoff-Mischung F.2 mit grösseren Partikeln für das flächige Formstück eingebracht. Die beiden Mischungen F.1 und F.2 unterscheiden sich insbesondere durch die kleineren Partikel in der Mischung F.1 und die grösseren Partikel in der Mischung F.2 voneinander.

Der Formteil 13 wird geschlossen mit einem zweiten Stempel 15, der als Negativform für die Kanalanschlussmittel Ausnehmungen 16 aufweist (Figur 9). Diese Ausnehmungen 16 sind mit Kunststoffmaterial S ohne Partikel gefüllt und die dem Formteil 13 zugewandte Stirnseite 17 des Stempels 15 ist mit Ausnahme der potentiellen Kanalanschlussöffnung mit einer Schicht des Kunststoffmaterials S bedeckt. Mit dem zweiten Stempel 15 werden Formstuck 3 und Oberflächenschicht 4 zusammen gepresst (Figur 10), wobei der Pressdruck nicht grösser sein soll als bei der Pressung mit dem ersten Stempel 14. Gleichzeitig wird, wenn für die Aushärtung des Kunststoffes notwendig, Wärme zugeführt. Vorgängig zum Pressen oder während dem Pressen kann das Material in der Form auch vibriert werden.

Durch das Fressen und Vibrieren verbinden sich die Kunststoffanteile der verschiedenen Schichten und entsteht das im wesentlichen einstückige Begasungselement, das (noch in der Form) in der Figur 10 dargestellt ist. Stempel 15 und Formteil 13 werden dann vom Begasungselement entfernt (Stempel 15 durch Ausschrauben). Das Begasungselement ist damit fertig und sofort bereit für den Einsatz.

Für die Herstellung von Begasungselementen mit einem gröber porösen Formstück und mehreren feiner porösen Schichten ist das beschriebene Verfahren entsprechend anzuwenden. Für verschiedene Formen von Kanalanschlussmitteln (beispielsweise für Bayonettverschluss, Schnappverschluss etc.), ist der zweite Stempel 15 entsprechend mehrstückig zu konzipieren. Selbstverständlich können die Einformungen für die Anschlussmittel auch im Formteil 13 (statt im Stempel) vorgesehen sein, und das Begasungselement wird dann in umgekehrter Reihenfolge hergestellt. Dies bedingt allerdings, dass zur Pressung der Oberflächenschicht 4 ein höchstens gleich grosser Pressdruck notwendig ist wie für die Pressung der des Formstuck 3. Weitere, denkbare Verfahrensvarianten bestehen darin, dass Formstuck und Oberflächenschicht in zwei entsprechenden Formteilen erstellt werden, welche zwei Formteile dann zum Pressen und Aushärten aufeinander gebracht werden.

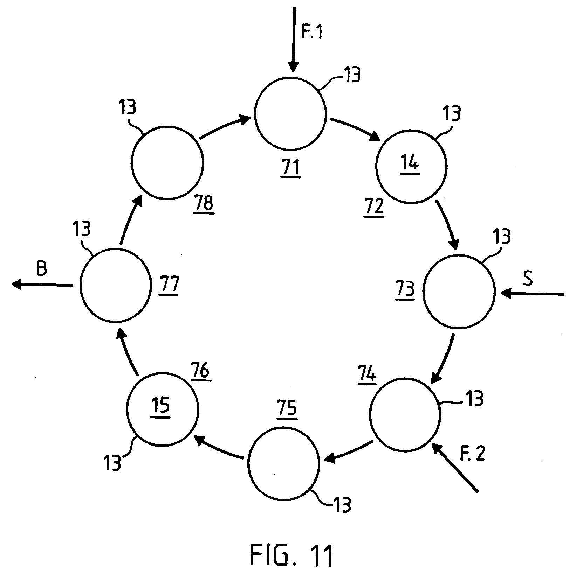

**Figur 11** zeigt noch einen beispielhaften Kreisprozess, mit dem Begasungselement gemäss Figur 5 mit einem Herstellungsverfahren gemäss Figuren 6 bis 10 kontinuierlich herstellbar sind. Es handelt sich um eine in sich geschlossene Förderstrecke, auf der acht Formteile 13 in Pfeilrichtung getaktet durch acht Positionen 71 bis 78 bewegt werden. Das Herstellungsverfahren beginnt in der Position 71, in der die erste Partikel/Kunststoff-Mischung F.1 in den Formteil 13 gegeben wird. In der Position 72, in der der erste Stempel 14 senkrecht zur Förderrichtung der Formteile 13 bewegbar angeordnet ist, wird die erst Mischung im Formteil mit dem Stempel 14 gepresst und gegebenenfalls vibriert und der Stempel wird wieder entfernt. In der Position 73 wird das Kunststoffmaterial S ohne Partikel an den Wänden des Formteils aufgebracht. In der Position 74 wird die zweite Partikel/Kunststoff-Mischung F.2 in den Formteil eingebracht. In der Position 76, an der der zweite Stempel 15 senkrecht zur Förderrichtung der Formteile 13 bewegbar angeordnet ist, wird dieser mit Kunststoffmaterial S ohne Partikel versehen, in den Formteil gepresst und nach dem Aushärten des Kunststoffes wieder entfernt. Für das Aushärten wird gegebenenfalls Wärme zugeführt. In der Position 77 wird Formteil und Inhalt ausgekühlt und das fertige Begasungselement B aus dem Formteil ausgestossen und in der Position 78 wird der Formteil gereinigt und gegebenenfalls mit einem Mittel gegen ein Anhaften des Kunststoffes behandelt.

Um die Zykluszeit eines Kreisverfahrens, wie es in der Figur 11 schematisch dargestellt ist, zu minimieren, ist es vorteilhaft, wenn die Begasungselemente im Formteil 13 nur gerade bis zu einem Zustand ausgehärtet werden, in dem sie für ein Ausstossen aus dem Formteil genügend fest sind. Ein abschliessender Aushärtungsschritt kann dann batchweise ausserhalb des kontinuierlichen Kreisprozesses durchgeführt werden.

Als mehr konkretes Beispiel für das erfindungsgemässe Begasungselement und seine Herstellung sind im folgenden die notwendigen Daten aufgelistet, die zu einem Begasungselement führen, das in einem Klärbecken ca. 2 bis 3m unter der Wasseroberfläche bei einem zur Verfügung stehenden Luft-Überdruck von 0,1bar bei einer sehr guten Lebensdauer eine überduchschnittlich gute Begasung liefert:

### Begasungselement:

- Form: rund, Durchmesser: 210mm
- Dicke der Oberflächenschicht 4: 6mm
- Dicke des Formstücks, 3: 11mm
- Dicke der Abschlussschicht: 0,5mm
- Kunststoff:: Epoxidharz
- Luftdurchlässigkeit bei 0,6bar Differenzdruck:: 6,6 l pro min und cm²

### Materialien:

erste Partikel/Kunststoff-Mischung F.1: 332g Partikel (AlSi, Siebfraktion ca 100µ), 83g Partikel (AlSi, Siehfraktion 63µm), 84g Epoxidharz, 12g Härter, Mischzeit 15Min;
zweite Partikel/Kunststoff-Mischung F.2: 622g Partikel (Al, Siebfraktion, 0,5 bis 1,25mm), 36g Epoxidharz, 9g Härter, Mischzeit 5Min;
Kunststoffmaterial S ohne Partikel: 80g Epoxidharz, 20g Härter, ca. 3g Verdickungsmaterial (z.B. Aerosil), ca. 5g kurzgeschnittene Glasfasern (ca. 3mm), ca. 3g Farbpigment.

### Parameter für das Herstellungsverfahren:

Behandlung der Oberflächenschicht 4: vorverdichten, dann pressen mit Pressdruck ca. 120 kp/cm², Pressdauer 5 bis 10sec.
Behandlung des Formteils: pressen mit Pressdruck ca 1kp/cm².
Aushärten des Begasungslementes unter Pressdruck ca 1kp/cm² bei 80°C für 3Std.

## Patentansprüche

1. Vorrichtung zur Leitung von Fluiden zwischen einem Kanal und einem Raum, welche Vorrichtung einen Fluid-durchlässigen Formkörper (3) mit einem an den Raum grenzenden, ebenfalls Fluid-durchlässigen Oberflächenbereich und eine bis auf eine Kanalanschlussöffnung (2) Fluid-dicht abgeschlossene restliche Oberfläche aufweist, wobei die Kanalanschlussöffnung (2) mit Kanalanschlussmitteln (12) versehen ist, wobei der Formkörper (3) und eine den Fluid-durchlässigen Oberflächenbereich bildende Oberflächenschicht (4) aus einem ausgehärteten Kunststoff mit einem kleineren Gewichtsanteil und in diesem Kunststoff eingelagerten Partikeln mit einem grösseren Gewichtsanteil bestehen und wobei im Formkörper (3) für eine gröbere Porosität grössere Partikel, in der Oberflächenschicht (4) für eine feinere Porosität kleinere Partikel eingelagert sind, derart, dass die feiner poröse Oberflächenschicht (4) an der Oberfläche offene und sich kontinuierlich in die gröberen Poren des Formkörpers (3) fortsetzende feinere Poren aufweist, **dadurch gekennzeichnet**, dass die restliche Oberfläche des Formkörpers (3) mit Ausnahme der Kanalanschlussöffnung (2) durch eine nichtporöse Abschlussschicht (5) aus demselben Kunststoff gebildet ist und dass der Formkörper (3), die Fluid-durchlässige Oberflächenschicht (4), die Fluid-dichte Abschlussschicht (5) und die Kanalanschlussmittel (12) einen einstückigen Kunststoffkörper bilden.

2. Vorrichtung nach Anspruch 1, **dadurch gekennzeichnet**, dass in der Oberflächenschicht (4) der Gewichtsanteil der Partikel kleiner ist als im Formkörper (3).

3. Vorrichtung nach einem der Anspüche 1 oder 2, **dadurch gekennzeichnet**, dass die im Kunststoff des Kunststoffkörpers eingelagerten Partikel unregelmässig geformt sind und dass sie aus Metall oder aus einem keramischen Material bestehen.

4. Vorrichtung nach einem der Ansprüche 1 bis 3, **dadurch gekennzeichnet**, dass die Partikel aus Aluminium oder aus einer Aluminiumlegierung bestehen und dass das Kunststoffmaterial des Kunststoffkörpers ein Epoxidkunststoff ist.

5. Vorrichtung nach einem der Ansprüche 1 bis 4, **dadurch gekennzeichnet**, dass die Partikel der Oberflächenschicht (4) aus einer Siebfraktion von 50µm bis 100µm, die Partikel des Formstücks (3) aus einer Siebfraktion von 0,5mm bis 1,25mm stammen und dass das Gewichtsverhältnis Partikel zu Kunststoff in der Oberflächenschicht (4) 1 : 0,1 bis 1 : 0,5 und im Formkörper (3) 1 : 0,05 bis 1 : 0,1 beträgt.

6. Vorrichtung nach einem der Ansprüche 1 bis 5, **dadurch gekennzeichnet**, dass die Oberflächenschicht (4) eine Dicke von 5 bis 10mm aufweist.

7. Vorrichtung nach einem der Ansprüche 1 bis 6, **dadurch gekenn**zeichnet, dass zwischen gröber porösem Formkörper (3) und feiner poröser Oberflächenschicht (4) als weiterer Bereich des einstückigen Kunststoffkörpers mindestens eine weitere poröse Schicht angeordnet ist, wobei die Feinheit der Porosität der mindestens einen weiteren porösen Schicht zwischen der Feinheit der Porosität des Formkörpers (3) und derjenigen der Oberflächenschicht (4) liegt.

8. Vorrichtung nach einem der Ansprüche 1 bis 7, **dadurch gekennzeichnet**, dass in die Fluid-undurchlässige Abschlussschicht (5) und/oder in den Kanalanschlussmitteln (12) Mittel zur mechanischen Verstärkung eingelagert sind.

9. Vorrichtung nach Anspruch 8, **dadurch gekennzeichnet**, dass die Mittel zur mechanischen Verstärkung Glasfasern sind.

10. Vorrichtung nach einem der Ansprüche 1 bis 9, **dadurch gekennzeichnet**, dass die Kanalanschlussmittel (12) die Form eines Rohrstutzens mit einem Innengewinde aufweisen.

11. Vorrichtung nach einem der Ansprüche 1 bis 10, **dadurch gekennzeichnet**, dass die Fluid-durchlässige Oberflächenschicht (4) eine konkave oder konvexe Form hat.

12. Vorrichtung nach einem der Ansprüche 1 bis 11, **dadurch gekennzeichnet**, dass der Formkörper (3) eine flächige Form aufweist, dass die Fluid-durchlässige Oberflächenschicht (4) die eine Seite des Formkörpers (3), die Abschlussschicht (5) die andere Seite des Formkörpers (3) bedeckt und dass die Kanalanschlussöffnung (2) im Zentrum dieser anderen Seite angeordnet ist.

13. Verfahren zur Herstellung einer Vorrichtung nach einem der Ansprüche 1 bis 12, **dadurch gekennzeichnet**, dass mit Hilfe eines ersten Formteilpaares bestehend aus einem ersten Formteil (9, 13) und einem zweiten Formteil (8, 14) zur Bildung der Fluiddurchlässigen Oberflächenschicht (4) eine Schicht einer ersten Mischung von aushärtbarem Kunststoff und ersten Partikeln erstellt und mit einem ersten Pressdruck verdichtet wird, dass mit Hilfe eines zweiten Formteilpaares bestehend aus einem dritten Formteil (11, 15) mit Einformungen (16) für Kanalanschlussmittel (12) und dem ersten Formteil (9, 13), dessen Innenoberfläche teilweise von der verdichteten Mischung für die Fluid-durchlässige Oberflächenschicht (4) bedeckt ist, auf diese Oberflächenschicht zur Bildung des Formkörpers (3) eine zweite Mischung von aushärtbarem Kunststoff und zweiten Partikeln, die grösser sind als die ersten Partikel aufgebracht und mit einem zweiten Pressdruck, der niedriger ist als der erste Pressdruck, verdichtet wird und dass dann der Kunststoff ausgehärtet wird, wobei zur Erstellung der Abschlussschicht (5) und der Kanalanschlussmittel (12) die Einformungen (16) des dritten Formteils für Kanalanschlussmittel (12) mit aushärtbarem Kunststoff ausgefüllt und die Innenoberflache des dritten Formteils (11, 15) und des ersten Formteils (9, 13), da wo sie nicht von der ersten Mischung bedeckt ist, mit aushärtbarem Kunststoff beschichtet werden.

14. Verfahren nach Anspruch 13, **dadurch gekennzeichnet**, dass die erste und/oder die zweite Mischung durch Vibrieren und durch einen Pressdruck verdichtet werden.

15. Verfahren nach Anspruch 13 oder 14, **dadurch gekennzeichnet**, dass für die erste Mischung, aus der die Oberflächenschicht (4) hergestellt wird, ein Pressdruck von ca. 120 kp/cm², für die zweite Mischung, aus der der Formkörper (3) hergestellt wird, ein Pressdruck von ca. 1 kp/cm² zur Anwendung kommen.

16. Verfahren nach Anspruch 13, **dadurch gekennzeichnet**, dass die erste Mischung, aus der die Oberflächenschicht (4) hergestellt wird, mit einer Folie dicht abgedeckt wird und dass im Raum zwischen Folie und Formteil zur Verdichtung der Mischung ein Unterdruck erzeugt wird.

17. Verfahren nach einem der Ansprüche 13 bis 16, **dadurch gekennzeichnet**, dass die Mischungen von Partikeln und aushärtbarem Kunststoff in einem Mischvorgang mit mischender und knetender Wirkung erzeugt werden.

18. Verwendung der Vorrichtung nach einem der Ansprüche 1 bis 12 als Begasungselement.

19. Verwendung der Vorrichtung nach einem der Ansprüche 1 bis 12 zum Tiefziehen von Kunststoffolien oder zum Nachexpandieren und Verschweissen von Kunststoffgranulat zur Herstellung von lost-foam-Giessformen oder anderen Teilen aus Polystyrolgranulat.

20. Verwendung der Vorrichtung nach einem der Ansprüche 1 bis 12 als Form zur Herstellung von Keramikgegenständen und zum Ausstossen der Keramikgegenstände durch Fluidapplikation durch die Form.

## Claims

1. Device for conducting fluids between a duct and a space, which device has a fluid-permeable moulded body (3), having a likewise fluid-permeable surface region bordering the space, and a remaining surface which is closed off fluid-tight except for a duct-connection opening (2), the duct-connection opening (2) being provided with duct-connection means (12), the moulded body (3) and a surface layer (4) which forms the fluid-permeable surface region consisting of a cured plastic which has a smaller proportion by weight and particles which are embedded in this plastic and have a larger proportion by weight, larger particles being embedded in the moulded body (3) for coarser porosity and smaller particles being embedded in the surface layer (4) for finer porosity in such a way that the surface layer (4) of finer porosity has finer pores which are open at the surface and extend continuously into the coarser pores of the moulded body (3), characterized in that the remaining surface of the moulded body (3), with the exception of the duct-connection opening (2), is formed by a non-porous closure layer (5) of the same plastic, and in that the moulded body (3), the fluid-permeable surface layer (4), the fluid-tight closure layer (5) and the duct-connection means (12) form a one-piece plastic body.

2. Device according to Claim 1, characterized in that the proportion by weight of the particles is smaller in the surface layer (4) than in the moulded body (3).

3. Device according to either of Claims 1 or 2, characterized in that the particles embedded in the plastic of the plastic body are of irregular shape, and in that they are made of metal or a ceramic material.

4. Device according to one of Claims 1 to 3, characterized in that the particles are made of aluminium or an aluminium alloy, and in that the plastic material of the plastic body is an epoxy plastic.

5. Device according to one of Claims 1 to 4, characterized in that the particles of the surface layer (4) originate from a sieve fraction of 50 µm to 100 µm, and the particles of the moulded body (3) originate from a sieve fraction of 0.5 mm to 1.25 mm, and in that the weight ratio of particles to plastic is 1 : 0.1 to 1 : 0.5 in the surface layer (4) and 1 : 0.05 to 1 : 0.1 in the moulded body (3).

6. Device according to one of Claims 1 to 5, characterized in that the surface layer (4) has a thickness of 5 to 10 mm.

7. Device according to one of Claims 1 to 6, characterized in that at least one further porous layer is arranged as a further region of the one-piece plastic body between moulded body (3) of coarser porosity and surface layer (4) of finer porosity, the fineness of the porosity of the at least one further porous layer lying between the fineness of the porosity of the moulded body (3) and that of the surface layer (4).

8. Device according to one of Claims 1 to 7, characterized in that means for mechanical reinforcement are embedded in the fluid-impermeable closure layer (5) and/or in the duct-connection means (12).

9. Device according to Claim 8, characterized in that the means for mechanical reinforcement are glass fibres.

10. Device according to one of Claims 1 to 9, characterized in that the duct-connection means (12) have the form of a pipe socket having an internal thread.

11. Device according to one of Claims 1 to 10, characterized in that the fluid-permeable surface layer (4) has a concave or convex form.

12. Device according to one of Claims 1 to 11, characterized in that the moulded body (3) has a flat-spread form, in that the fluid-permeable surface layer (4) covers the one side of the moulded body (3) and the closure layer (5) covers the other side of the moulded body (3), and in that the duct-connection opening (2) is arranged in the centre of this other side.

13. Method of producing a device according to one of Claims 1 to 12, characterized in that, by means of a first pair of mould parts, consisting of a first mould part (9, 13) and a second mould part (8, 14) for forming the fluid-permeable surface layer (4), a layer of a first mixture of curable plastic and first particles is produced and compacted with a first applied pressure, in that, by means of a second pair of mould parts, consisting of a third mould part (11, 15) having moulded-in portions (16) for duct-connection means (12) and the first mould part (9, 13), the inner surface of which is partly covered by the compacted mixture for the fluid-permeable surface layer (4), a second mixture of curable plastic and second particles which are larger than the first particles is applied to this surface layer for forming the moulded body (3) and is compacted with a second applied pressure which is lower than the first applied pressure, and in that the plastic is then cured, in which case, to produce the closure layer (5) and the duct-connection means (12), the moulded-in portions (16) of the third mould part for duct-connection means (12) are filled with curable plastic, and the inner surface of the third mould part (11, 15) and the first mould part (9, 13) is coated with curable plastic where it is not covered by the first mixture.

14. Method according to Claim 13, characterized in that the first and/or the second mixture is compacted by vibration and by an applied pressure.

15. Method according to Claim 13 or 14, characterized in that an applied pressure of about 120 kp/cm² is used for the first mixture, from which the surface layer (4) is produced, and an applied pressure of about 1 kp/cm² is used for the second mixture, from which the moulded body (3) is produced.

16. Method according to Claim 13, characterized in that the first mixture, from which the surface layer (4) is produced, is tightly covered with a film, and in that a vacuum is produced in the space between film and mould part in order to compact the mixture.

17. Method according to one of Claims 13 to 16, characterized in that the mixtures of particles and curable plastic are produced in a mixing operation having a mixing and kneading action.

18. Use of the device according to one of Claims 1 to 12 as a gassing element.

19. Use of the device according to one of Claims 1 to 12 for the thermoforming of plastic films or for the subsequent expanding and welding of plastics granules for producing lost-foam casting moulds or other parts of polystyrene granules.

20. Use of the device according to one of Claims 1 to 12 as a mould for producing ceramic articles and for ejecting the ceramic articles by fluid application through the mould.

## Revendications

1. Dispositif pour conduire des fluides entre un conduit et un espace, lequel dispositif présente un élément moulé (3) perméable aux fluides et comprenant une région de surface adjacente a l'espace, elle aussi perméable aux fluides, et une surface restante, obturée de façon étanche aux fluides à l'exception d'une ouverture (2) de raccordement du conduit, l'ouverture (2) de raccordement du conduit étant munie de moyens (12) de raccordement du conduit, l'élément moulé (3) et une couche superficielle (4), qui forme la région de surface perméable aux fluides, étant composés d'une résine synthétique durcie qui représente une plus petite proportion en poids et de particules noyées dans cette résine synthétique qui représentent une plus grande proportion en poids, des particules plus grosses étant noyées dans l'élément moulé (3) pour lui conférer une porosité plus grossière, tandis que de plus petites particules sont noyées dans la couche superficielle (4) pour lui conférer une porosité plus fine, de telle manière que la couche superficielle (4) a pores plus fins présente des pores plus fins ouverts au niveau de la surface et qui se prolongent sans solution de continuité pour se terminer dans les pores plus grossiers de l'élément moulé (3), caractérisé en ce que la surface restante de l'élément moulé (3) est formée, à l'exception de l'ouverture (2) de raccordement du conduit, par une couche obturatrice non poreuse (5) faite de la même résine synthétique et en ce que l'élément moulé (3), la couche superficielle (4) perméable aux fluides et la couche obturatrice (5) étanche aux fluides ainsi que les moyens (12) de raccordement du conduit forment un élément en résine synthétique d'une seule pièce.

2. Dispositif selon la revendication 1, caractérisé en ce que la proportion en poids des particules est plus petite dans la couche superficielle (4) que dans l'élément moulé (3).

3. Dispositif selon une des revendications 1 et 2, caractérisé en ce que les particules noyées dans la résine synthétique de l'élément en résine synthétique sont de forme irrégulière et en ce qu'elles sont faites de métal ou d'une matière céramique.

4. Dispositif selon une des revendications 1 à 3, caractérisé en ce que les particules sont faites d'aluminium ou d'un alliage d'aluminium et en ce que la résine synthétique de l'élément en résine synthétique est une résine synthétique époxyde.

5. Dispositif selon une des revendications 1 à 4, caractérisé en ce que les particules de la couche superficielle (4) proviennent d'une fraction granulométrique de 50 µm à 100 µmm, les particules de l'élément moulé (3) proviennent d'une fraction granulométrique de 0,5 mm à 1,25 mm et en ce que le rapport en poids des particules à la résine synthétique (4) est de 1:0,1 à 1:0,5 dans la couche superficielle (4) et de 1:0,05 à 1:0,1 dans l'élément moulé (3).

6. Dispositif selon une des revendications 1 à 5, caractérisé en ce que la couche superficielle (4) possède une épaisseur de 5 à 10 mm.

7. Dispositif selon une des revendications 1 à 6, caractérisé en ce qu'au moins une autre couche poreuse est interposée entre l'élément moulé (3) à porosité grossière et la couche superficielle (4) à porosité fine, pour constituer une région supplémentaire de l'élément en résine synthétique d'une seule pièce, la finesse de la porosité de l'au moins une autre couche poreuse étant intermédiaire entre la finesse de la porosité de l'élément moulé (3) et celle de la couche superficielle (4).

8. Dispositif selon une des revendications 1 à 7, caractérisé en ce que, dans la couche obturatrice (5) imperméable aux fluides et/ou dans les moyens (12) de raccordement du conduit, sont noyés des moyens de renforcement mécanique.

9. Dispositif selon la revendication 8, caractérisé en ce que les moyens de renforcement mécanique sont des fibres de verre.

10. Dispositif selon une des revendications 1 à 9, caractérisé en ce que les moyens (12) de raccordement du conduit présentent la forme d'une tubulure possédant un filetage intérieur.

11. Dispositif selon une des revendications 1 à 10, caractérisé en ce que la couche superficielle (4) perméable aux fluides a une forme concave ou convexe.

12. Dispositif selon une des revendications 1 à 11, caractérisé en ce que l'élément moulé (3) présente une forme plate, en ce que la couche superficielle (4) perméable aux fluides couvre un côté de l'élément moulé (3), que la couche obturatrice (5) couvre l'autre côté de l'élément moulé (3), et en ce que l'ouverture (2) de raccordement du conduit est disposée au centre de cet autre côté.

13. Procédé de fabrication d'un dispositif selon une des revendications 1 à 12, caractérisé en ce que, pour la formation de la couche superficielle (4) perméable aux fluides, on prépare une couche d'un premier mélange d'une résine synthétique durcissable et de premières particules à l'aide d'une première paire de demi-moules, composée d'un premier demi-moule (9, 13) et d'un deuxième demi-moule (8, 14), et qu'on la compacte avec une première pression de pressage, en ce qu'à l'aide d'une deuxième paire de demi-moules, composée d'un troisième demi-moule (11, 15), muni d'empreintes (16) pour les moyens (12) de raccordement du conduit, et du premier demi-moule (9, 13) dont la surface interne est partiellement recouverte par le mélange compacté servant pour la couche superficielle (4) perméable aux fluides, on dépose sur ce mélange un deuxième mélange de résine synthétique durcissable et de deuxièmes particules qui sont plus grosses que les premières particules pour la formation de l'élément moulé (3) et on compacte ce deuxième mélange avec une deuxième pression de pressage qui est plus faible que la première pression de pressage et en ce qu'ensuite, la résine synthétique est durcie, cependant que, pour la formation de la couche obturatrice (5) et des moyens (12) de raccordement du conduit, on remplit les empreintes (16) du troisième demi-moule destinées aux moyens (12) de raccordement du conduit avec une résine synthétique durcissable, et on revêt la surface interne du troisième demi-moule (11, 15) et du premier demi-moule (9, 13) d'une résine synthétique durcissable à l'endroit où elles ne sont pas recouvertes par le premier mélange.

14. Procédé selon la revendication 13, caractérisé en ce que le premier et/ou le deuxième mélanges sont compactés par vibration et par une pression de pressage.

15. Procédé selon la revendication 13 ou 14, caractérisé en ce que, pour le premier mélange à partir duquel la couche superficielle (4) est produite, on utilise une pression de pressage d'environ 120 kp/cm² et que, pour le deuxième mélange à partir duquel l'élément moulé (3) est produit, on utilise une pression de pressage d'environ 1 kp/cm².

16. Procédé selon la revendication 13, caractérisé en ce que le premier mélange à partir duquel la couche superficielle (4) est produite est recouvert de façon étanche au moyen d'une pellicule et en ce qu'on établit une dépression dans le volume compris entre la pellicule et le demi-moule pour compacter le mélange.

17. Procédé selon une des revendications 13 à 16, caractérisé en ce que les mélanges de particules et d'une résine synthétique durcissable sont produits dans une opération de brassage ayant un effet de brassage et de pétrissage.

18. Emploi du dispositif selon une des revendications 1 à 12 en tant qu'organe de distribution de gaz.

19. Emploi du dispositif selon une des revendications 1 à 12 pour l'emboutissage de feuilles de résine synthétique ou pour l'expansion ultérieure et le soudage d'un granulé de résine synthétique en vue de la production de moules de coulée à la mousse perdue, ou d'autres pièces en granulé de polystyrène.

20. Emploi du dispositif selon une des revendications 1 à 12 en tant que moule pour la fabrication d'objets céramiques et pour l'éjection d'objets céramiques par insufflation d'un fluide à travers le moule.
